# EUROPÄISCHE PATENTSCHRIFT

(11) **EP 3 810 470 B1**
(45) Veröffentlichungstag und Bekanntmachung des Hinweises auf die Patenterteilung: **22.02.2023**
(21) Anmeldenummer: 19727977.1
(22) Anmeldetag: 24.05.2019
(51) Int. Cl.: B60T 17/22, B60T 13/74, F16D 66/00

(54) **VERFAHREN ZUM ANSTEUERN EINER ELEKTROMECHANISCHEN BREMSVORRICHTUNG IN EINEM FAHRZEUG**
METHOD FOR CONTROLLING AN ELECTROMECHANICAL BRAKE DEVICE IN A VEHICLE
PROCÉDÉ SERVANT À PILOTER UN DISPOSITIF DE FREINAGE ÉLECTROMÉCANIQUE DANS UN VÉHICULE

(30) Priorität: 22.06.2018 DE 102018210232
(43) Veröffentlichungstag der Anmeldung: 28.04.2021
(73) Patentinhaber: Robert Bosch GmbH, 70442 Stuttgart (DE)
(72) Erfinder: BAEHRLE-MILLER, Frank, 71101 Schoenaich (DE); WIENKEN, Hubertus, 74243 Langenbrettach (DE); ISKE, Burkhard, 71272 Renningen (DE)
(86) Internationale Anmeldenummer: PCT/EP2019/063470
(87) Internationale Veröffentlichungsnummer: WO 2019/242987

(56) Entgegenhaltungen:
- DE-A1-102012 202 951
- US-A1- 2009 218 179
- US-A1- 2014 069 750
- US-A1- 2016 176 388

## Beschreibung

Die Erfindung bezieht sich auf ein Verfahren zum Ansteuern einer elektromechanischen Bremsvorrichtung in einem Fahrzeug, über die mithilfe eines elektrischen Bremsmotors, welcher einen Bremskolben gegen eine Bremsscheibe beaufschlagt, eine Bremskraft erzeugt werden kann.

### Stand der Technik

In der DE 10 2012 202 959 A1 wird ein Verfahren zum Bereitstellen der von einer Feststellbremse in einem Fahrzeug erzeugten Klemmkraft beschrieben. Die Feststellbremse ist als eine elektromechanische Bremsvorrichtung mit einem elektrischen Bremsmotor ausgeführt, über die eine Klemmkraft zum Festsetzen des Fahrzeugs im Stillstand erzeugbar ist. Hierbei führt eine Rotationsbewegung des elektrischen Bremsmotors zu einer axialen Stellbewegung eines Bremskolbens, welcher Träger eines Bremsbelages ist. Der Bremskolben drückt den Bremsbelag gegen eine Bremsscheibe. Auf den Bremskolben wirkt außerdem der hydraulische Druck der regulären Fahrzeugbremse, mit der das Fahrzeug während der Fahrt abgebremst wird.

Bei dem in der DE 10 2012 202 959 A1 beschriebenen Verfahren wird im Anschluss an einen ersten Zuspannvorgang der elektrische Bremsmotor zur Durchführung eines Nachspannvorgangs nochmals betätigt, wobei der Nachspannvorgang in Abhängigkeit der Bremsscheibentemperatur durchgeführt wird.

Die US 2014/0069750 A1 offenbart eine elektromechanische Bremsvorrichtung in einem Fahrzeug mit einem elektrischen Bremsmotor, welcher einen Bremskolben gegen eine Bremsscheibe beaufschlagt. Der Bremsmotor wird temperaturabhängig angesteuert, wodurch eine Temperaturkompensation verwirklicht wird. Dies erfolgt in der Weise, dass ein gegebener Abstand zwischen den Bremsbelägen und der Bremsscheibe eingehalten wird.

Die US 2009/0218179 A1 offenbart eine elektromechanische Parkbremse, die einen elektrischen Bremsmotor umfasst, bei dessen Betätigung eine Parkbremskraft eingestellt wird. Hierbei wird eine thermische Ausdehnung der Bremskomponenten berücksichtigt, um die geforderte Parkbremskraft gewährleisten zu können.

Die DE 10 2012 202 951 A1 zeigt eine elektromechanische Feststellbremse mit einem elektrischen Bremsmotor, wobei die Klemmkraft nach dem Abstellen des Fahrzeugs in Abhängigkeit der Bremsscheibentemperatur bereitgestellt wird.

Die US 2016/0176388 A1 offenbart ebenfalls eine elektromechanische Parkbremse mit einem elektrischen Bremsmotor, der in Abhängigkeit der Bremsscheibentemperatur aktiviert wird.

### Offenbarung der Erfindung

Das erfindungsgemäße Verfahren bezieht sich auf das Ansteuern einer elektromechanischen Bremsvorrichtung in einem Fahrzeug, wobei die elektromechanische Bremsvorrichtung einen elektrischen Bremsmotor umfasst, welcher einen Bremskolben mit einem Bremsbelag gegen eine Bremsscheibe beaufschlagt, um Bremskraft zu erzeugen.

Die elektromechanische Bremsvorrichtung kann in eine Radbremseinrichtung integriert sein, die auch Teil der hydraulischen Fahrzeugbremse ist. In diesem Fall wird der Bremskolben bei Betätigung der hydraulischen Fahrzeugbremse vom Bremsdruck beaufschlagt und gegen die Bremsscheibe gedrückt. Die hydraulische Fahrzeugbremse und die elektromechanische Bremsvorrichtung bilden ein gemeinsames Bremssystem.

Mithilfe des erfindungsgemäßen Verfahrens kann die elektromechanische Bremsvorrichtung vor oder während des Erzeugens einer elektromechanischen Bremskraft angesteuert werden. Das Verfahren dient dazu, die Position des Bremskolbens auf eine gewünschte Position einzustellen, wobei die Positionsbestimmung und -einstellung in Abhängigkeit der Bremsentemperatur erfolgt. Dies ermöglicht es, temperaturabhängig durch eine entsprechende Ansteuerung des elektrischen Bremsmotors die Position des Bremskolbens so zu verstellen, dass Nachteile, welche sich durch eine Temperaturänderung in der Bremsvorrichtung ergeben, vermieden werden. Es können insbesondere temperaturbedingte Längenänderungen der Komponenten der elektromechanischen Bremsvorrichtung kompensiert werden.

Das Verfahren bezieht sich auf ein fahrendes Fahrzeug. Die Position des Bremskolbens wird entsprechend bei fahrendem Fahrzeug in Abhängigkeit der Bremsentemperatur eingestellt. Dies ermöglicht es, bei Bedarf innerhalb kurzer Zeit eine gewünschte Bremskraft über die elektromechanische Bremsvorrichtung bereitzustellen, wobei temperaturbedingte negative Einflüsse kompensiert werden. Beispielsweise kann eine Temperaturabsenkung zu einer Kontraktion der Komponenten der Bremsvorrichtung führen und der Stellweg, welcher von den Bremskolben bis zum Anliegen an der Bremsscheibe zurückgelegt werden muss, erhöht werden. Indem bereits bei fahrendem Fahrzeug die Position des Bremskolbens entsprechend verstellt wird, kann die Zeitspanne zwischen Anforderung und Wirksamwerden der Bremskraft verkürzt werden.

Umgekehrt kann auch bei einer Temperaturerhöhung die Position des Bremskolbens temperaturabhängig angepasst werden. Es kann beispielsweise der Bremskolben zurückgefahren werden, um einen Mindestabstand zur Bremsscheibe einzuhalten und ein unbeabsichtigtes Schleifen des Bremsbelags an der Bremsscheibe zu vermeiden.

Das Verfahren wird auf Situationen angewendet, bei denen der Bremsbelag an der Bremsscheibe anliegt und eine Bremskraft erzeugt wird. Die Position des Bremskolbens wird temperaturabhängig angepasst bzw. korrigiert, zum Aufrechterhalten einer konstanten oder zumindest annähernd konstanten Bremskraft. Dementsprechend wird der Bremsmotor beispielsweise bei einer Temperaturerhöhung geringfügig in Löserichtung und be einer Temperaturabsenkung geringfügig in Bremsrichtung verstellt, um die Bremskraft zu verringern bzw. zu erhöhen.

Das Verfahren bezieht sich ausschließlich auf Situationen mit fahrendem Fahrzeug. Das Fahrzeug nimmt eine Mindestgeschwindigkeit ein, die beispielsweise bei 3 km/h liegt, wobei über die elektromechanische Bremsvorrichtung während der Fahrt eine Temperaturkompensation durch eine Verstellung der Position des Bremskolbens durchgeführt wird. Diese Vorgehensweise ermöglicht es, beispielsweise einen Einpark- oder Ausparkvorgang des Fahrzeugs selbsttätig durchzuführen, wobei der Fahrer sich gegebenenfalls außerhalb des Fahrzeugs befinden kann. Aufgrund der Temperaturkompensation der Bremskolbenposition ist sichergestellt, dass die für den selbsttätigen Einpark- oder Ausparkvorgang erforderliche Bremskraft in ausreichender Höhe und in der geforderten Zeit bereitgestellt werden kann und außerdem ein Überhitzen der Bremseinrichtung vermieden wird.

Grundsätzlich eignet sich das Verfahren auch für höhere Fahrzeuggeschwindigkeiten als bei einem Einpark- oder Ausparkvorgang erforderlich. Auch bei höheren Fahrzeuggeschwindigkeiten kann gegebenenfalls über die elektromechanische Bremsvorrichtung eine Bremskraft erzeugt werden, um das Fahrzeug abzubremsen. Auch in diesem Fall wird durch temperaturabhängige Ansteuerung des elektrischen Bremsmotors und Positionseinstellung des Bremskolbens eine Temperaturkompensation erreicht.

Insbesondere nach längerer Fahrt und häufiger Betätigung der Bremse im Fahrzeug kann die Situation auftreten, dass die Bremsentemperatur erhöht ist. Mithilfe des erfindungsgemäßen Verfahrens ist es möglich, auch in diesen Situationen die gewünschte Temperaturkompensation über die Ansteuerung des Bremsmotors und des Bremskolbens zu erreichen.

Die Positionseinstellung des Bremskolbens kann weggesteuert oder kraftgesteuert durchgeführt werden. In den Fällen, in denen der Bremskolben bzw. der am Bremskolben gehaltene Bremsbelag auf Abstand zur Bremsscheibe liegt, ist es insbesondere zweckmäßig, eine weggesteuerte Ansteuerung des elektrischen Bremsmotors und des Bremskolbens durchzuführen. Hierbei wird eine Sollposition für den Bremskolben vorgegeben, die typischerweise zwischen einer maximal zurückgezogenen Position des Bremskolbens und der Kontaktposition des Bremsbelags an der Bremsscheibe liegt. Die Sollposition, auf die der Bremskolben eingestellt wird, wird temperaturabhängig festgelegt.

Für den Fall, dass der Bremskolben bzw. der am Bremskolben angeordnete Bremsbelag auf Kontakt zur Bremsscheibe liegt und entsprechend eine Bremskraft erzeugt wird, kann es vorteilhaft sein, eine kraftgesteuerte Einstellung der Bremskolbenposition durchzuführen. Hierbei wird die Bremskolbenposition als Funktion der Bremsentemperatur in der Weise eingestellt, dass die Bremskraft vorteilhafterweise zumindest annähernd konstant bleibt, ungeachtet eines Anstiegs oder Abfallens der Bremsentemperatur.

Die Bremsentemperatur bezieht sich insbesondere auf eine Komponente bzw. ein Bauteil der elektromechanischen Bremsvorrichtung, beispielsweise die Bremsscheibentemperatur. Die Bremsentemperatur kann entweder mithilfe eines Temperatursensors oder aus einem Bremsentemperaturmodell aus bekannten Zustands- oder Betriebs- bzw. Kenngrößen der Bremsvorrichtung, des Fahrzeugs oder eines sonstigen Aggregats des Fahrzeugs bestimmt werden. Beispielsweise ist es möglich, die Temperatur eines Hydraulikmediums in einer hydraulischen Fahrzeugbremse als relevante Bremsentemperatur für das erfindungsgemäße Verfahren heranzuziehen oder aus der Temperatur des Hydraulikmediums auf die Bremsscheibentemperatur zu schließen. Sofern aus einem Bremsentemperaturmodell die Bremsentemperatur geschätzt wird, erfolgt dies gegebenenfalls auch ohne Zuhilfenahme eines Temperatursensors, beispielsweise aus der Anzahl von Bremsvorgängen innerhalb eines definierten Zeitraumes.

Die Erfindung bezieht sich des Weiteren auf ein Regel- bzw. Steuergerät zur Ansteuerung der einstellbaren Komponenten der elektromechanischen Bremsvorrichtung, mit der das vorbeschriebene Verfahren durchgeführt wird. Das Regel- bzw. Steuergerät kann gegebenenfalls Teil eines Bremssystems im Fahrzeug sein. In dem Regel- bzw. Steuergerät werden Stellsignale zur Ansteuerung der einstellbaren Komponenten der Bremsvorrichtung erzeugt, insbesondere des elektrischen Bremsmotors.

Die Erfindung bezieht sich außerdem auf eine elektromechanische Bremsvorrichtung für ein Fahrzeug, die vorteilhafterweise zum Festsetzen des Fahrzeugs im Stillstand verwendet wird, gegebenenfalls aber auch zum Abbremsen des Fahrzeugs aus höheren Geschwindigkeiten eingesetzt werden kann. Die elektromechanische Bremsvorrichtung umfasst wie vorbeschrieben einen elektrischen Bremsmotor, einen Bremskolben, welcher Träger eines Bremsbelages ist, sowie eine Bremsscheibe, gegen die der Bremskolben mit dem Bremsbelag verstellt wird, sowie ein vorbeschriebenes Regel- bzw. Steuergerät zur Ansteuerung der einstellbaren Komponenten.

Die elektromechanische Bremsvorrichtung kann gegebenenfalls gemeinsam mit einer hydraulischen Fahrzeugbremse ein Bremssystem im Fahrzeug bilden.

Gemäß noch einer weiteren vorteilhaften Ausführung, die sich auf die Kombination einer elektromechanischen Bremsvorrichtung mit der hydraulischen Fahrzeugbremse bezieht, wobei der Bremskolben sowohl von dem elektrischen Bremsmotor als auch von dem hydraulischen Bremsdruck in Richtung auf die Bremsscheibe verstellbar ist, wird die Position des Bremskolbens zum Ausgleichen des Temperatureinflusses durch eine Änderung des Bremsdrucks eingestellt. Die Positionseinstellung des Bremskolbens über eine Modifikation des hydraulischen Bremsdrucks erfolgt alternativ oder zusätzlich zur Bremskolbeneinstellung über den elektrischen Bremsmotor.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse, wobei Radbremseinrichtungen der Fahrzeugbremse mit elektromechanischen Bremsvorrichtungen mit jeweils einem elektrischen Bremsmotor ausgestattet sind,
- Fig. 2: einen Schnitt durch eine elektromechanische Bremsvorrichtung mit einem elektrischen Bremsmotor,
- Fig. 3: ein Ablaufschema mit Verfahrensschritten zum temperaturabhängigen Bereitstellen einer elektromechanischen Bremskraft während eines automatisierten Einparkvorganges.

In den Figuren sind gleiche Bauteile mit gleichen Bezugszeichen versehen.

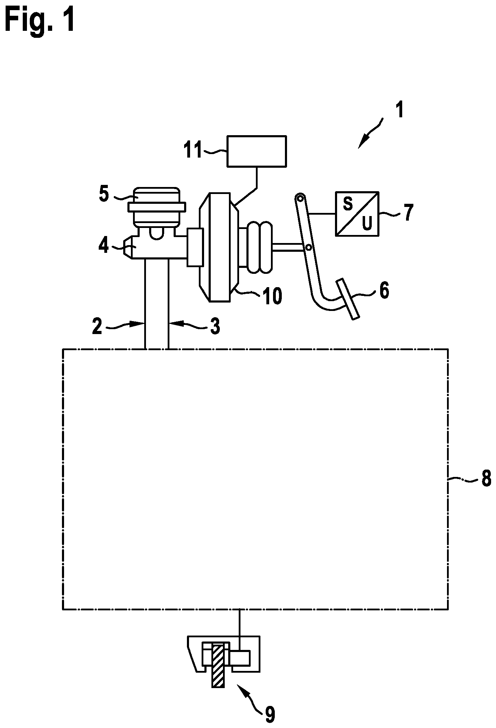

Das in Fig. 1 dargestellte Bremssystem für ein Fahrzeug umfasst eine hydraulische Zweikreis-Fahrzeugbremse 1 mit einem ersten hydraulischen Bremskreis 2 und einem zweiten hydraulischen Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben im Hauptbremszylinder 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster).

Die hydraulische Fahrzeugbremse 1 kann zusätzlich oder alternativ zu dem iBooster eine integrierte elektrohydraulische Bremseinheit mit einem elektromotorisch angetriebenen Plunger aufweisen. Die Fahrzeugbremse 1 ist vorteilhafterweise als ein Brake-By-Wire-System ausgebildet, wobei eine Bremspedalbetätigung zu einer Verschiebung von Hydraulikvolumen in einen Pedalwegsimulator führt. Der Bremsdruckaufbau erfolgt der Bremspedalbetätigung entsprechend über eine elektromotorische Betätigung des Plungers. Bei einem Ausfall der elektrohydraulischen Bremseinheit werden Trennventile, die die Bremskreise mit dem Hauptbremszylinder 4 verbinden, geöffnet, so dass der Fahrer bei einer Betätigung des Bremspedals einen direkten hydraulischen Durchgriff auf die Radbremseinrichtungen 9 hat.

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist.

Die beiden hydraulischen Bremskreise 2 und 3 der Zweikreis-Fahrzeugbremse 1 sind beispielsweise diagonal aufgeteilt, so dass der erste Bremskreis 2 beispielsweise die beiden Radbremseinrichtungen 9 am linken Vorderrad und am rechten Hinterrad und der zweite Bremskreis 3 die beiden Radbremseinrichtungen 9 am rechten Vorderrad und am linken Hinterrad mit Bremsfluid versorgt. Alternativ ist auch eine Aufteilung beiden hydraulischen Bremskreise 2 und 3 der Zweikreis-Fahrzeugbremse 1 auf die Radbremseinrichtungen an der Vorderachse und die Radbremseinrichtungen an der Hinterachse möglich.

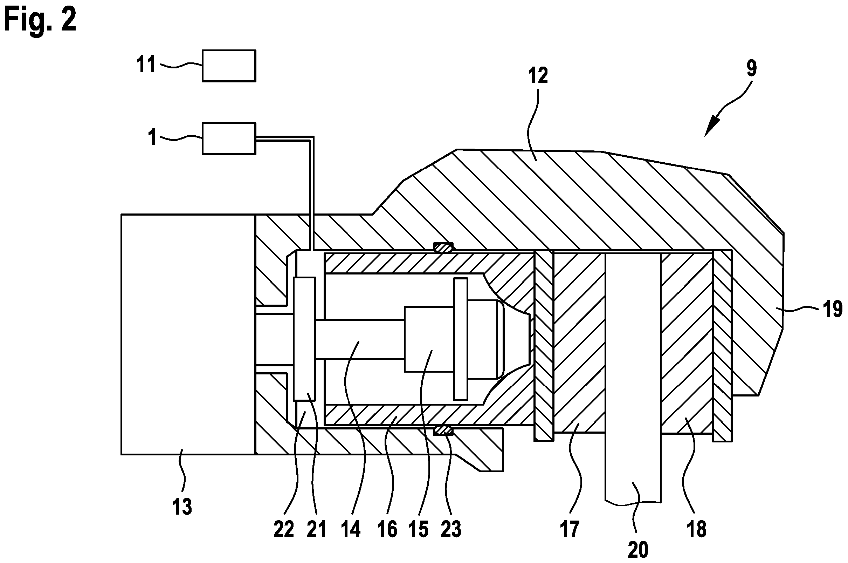

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus einem Bremskreis 2, 3 mit Bremsfluid 22 versorgt. Die Radbremseinrichtung 9 weist außerdem eine elektromechanische Bremsvorrichtung auf, die als Feststellbremse zum Festsetzen des Fahrzeugs im Stillstand, jedoch auch bei einer Bewegung des Fahrzeugs zum Abbremsen eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist zur Durchführung eines Bremsvorgangs entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

Die in Fig. 2 dargestellte Radbremseinrichtung 9, die zusätzlich mit der elektromechanischen Bremsvorrichtung mit dem Bremsmotor 13 ausgestattet ist, befindet sich vorzugsweise an der Hinterachse des Fahrzeugs. Die elektrischen Bremsmotoren 13 in den beiden Radbremseinrichtungen 9 an der Hinterachse können unabhängig voneinander angesteuert werden.

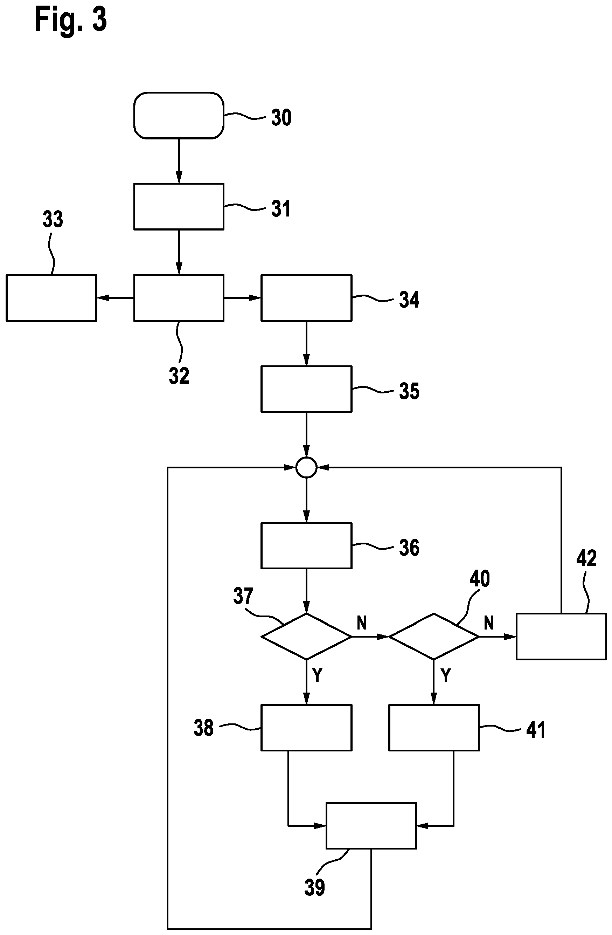

In Fig. 3 ist ein Ablaufschema mit Verfahrensschritten zur temperaturabhängigen Bereitstellung einer elektromechanischen Bremskraft während eines automatisierten Einparkvorganges dargestellt. Nach dem Start des Verfahrens im Schritt 30 wird im folgenden Schritt 31 das Fahrzeug gestoppt, beispielsweise an einer Übergabestation, an der der Fahrer aus dem Fahrzeug aussteigt und das Fahrzeug von der Übergabestation startend automatisiert eingeparkt wird. Im nächsten Schritt 32 wird der automatisierte Parkvorgang begonnen, beispielsweise auf Befehl des Fahrers, einer dritten Person oder automatisiert. Daraufhin wird eine Bremskraft in der elektromechanischen Bremsvorrichtung voreingestellt, indem der elektrische Bremsmotor betätigt und der Bremskolben in Richtung auf die Bremsscheibe verstellt wird, bis der Bremsbelag am Bremskolben auf Kontakt zur Bremsscheibe liegt. Die Bremskraft wird in einer Höhe eingestellt, dass der Einparkvorgang, welcher mit niedriger Geschwindigkeit durchgeführt wird, trotz der anliegenden Bremskraft durchgeführt werden kann. Das Anliegen des Bremsbelages an der Bremsscheibe bietet den Vorteil einer kurzen Reaktionszeit für den Fall, dass das Fahrzeug über eine weitere Betätigung des elektrischen Bremsmotors abgebremst werden soll, gegebenenfalls bis zum Stillstand.

Die weiteren Verfahrensschritte 34 bis 42 werden fortlaufend während des Einparkvorganges durchgeführt. Es handelt sich hierbei um eine Korrektur der dauerhaft anliegenden Bremskraft, die im Schritt 33 voreingestellt wurde, zur Kompensation von temperaturbedingten Längenänderungen in den Komponenten der Bremseinrichtung.

Zunächst wird in einem Schritt 34 die aktuelle Bremsentemperatur geschätzt, beispielsweise die Bremsscheibentemperatur. Die Schätzung erfolgt durch Auswertung von Zustands- oder Betriebsgrößen der Fahrzeugbremse oder des Fahrzeugs, beispielsweise über eine Auswertung der Anzahl der Bremsenbetätigungen in einem bestimmten Zeitraum. Zusätzlich oder alternativ kann in Schritt 34 die Bremsentemperatur auch mithilfe eines Temperatursensors bestimmt werden.

Es ist auch möglich, die Bremsentemperaturschätzung/-ermittlung bereits während des regulären Fahrbetriebs, also noch vor dem Start des automatisierten Einparkvorganges durchzuführen.

Im nächsten Schritt 35 wird das Fahrzeug in Bewegung gesetzt, um den Einparkvorgang durchzuführen. Während der Fahrzeugbewegung wirkt die im Schritt 33 voreingestellte Bremskraft fort, was aufgrund der Reibung zu einer Temperaturerhöhung führen kann.

Im nächsten Schritt 36 erfolgt eine erneute Bestimmung der Bremsentemperatur durch Schätzen oder Messung. Im nächsten Schritt 37 erfolgt eine Abfrage, ob die Bremsentemperatur um eine Mindesttemperaturdifferenz angestiegen ist, beispielsweise sich um mindestens 20° erhöht hat. Ist dies der Fall, wird der Ja-Verzweigung ("Y") zum Schritt 38 fortgefahren und der elektrische Bremsmotor in Richtung eines Lösens der Bremskraft angesteuert. Die Ansteuerung erfolgt kraftgesteuert oder weggesteuert in der Weise, dass die Bremskraft zumindest annähernd konstant auf dem im Schritt 33 eingestellten Niveau verbleibt. Im Schritt 38 wird der temperaturbedingten Ausdehnung von Komponenten der Bremsvorrichtung Rechnung getragen.

Anschließend wird im Schritt 39 die aktuelle Bremsentemperatur, welche im Schritt 36 ermittelt wurde, abgespeichert und danach zum Schritt 36 zurückgekehrt, um das Verfahren in zyklischen Abständen erneut zu durchlaufen.

Ergibt die Abfrage im Schritt 37, dass kein Temperaturanstieg um eine Mindesttemperaturdifferenz vorliegt, wird der Nein-Verzweigung ("N") folgend zum Schritt 40 verzweigt, in welchem eine Abfrage durchgeführt wird, ob die Bremsentemperatur um eine Mindesttemperaturdifferenz von beispielsweise 20° abgesunken ist. Ist dies der Fall, wird der Ja-Verzweigung folgend zum Schritt 41 vorgerückt und der elektrische Bremsmotor in Richtung einer Erhöhung der Bremskraft angesteuert. Hiermit wird der temperaturbedingten Kontraktion der Komponenten der Bremsvorrichtung Rechnung getragen. Anschließend wird zum Schritt 39 vorgerückt, in welchem die aktuelle Bremsentemperatur abgespeichert wird, woraufhin das gesamte Verfahren ab Schritt 36 in zyklischen Abständen erneut durchlaufen wird.

Ergibt die Abfrage im Schritt 40, dass die Bremsentemperatur nicht um die Mindesttemperaturdifferenz abgesunken ist, so bewegt sich die Bremsentemperatur innerhalb eines zulässigen Temperaturbandes. Daraufhin wird der Nein-Verzweigung folgend zum Schritt 42 vorgerückt, gemäß dem keine Änderung in der Position des elektrischen Bremsmotors durchgeführt wird. Anschließend wird das Verfahren ab Schritt 36 erneut in zyklischen Abständen durchlaufen.

## Patentansprüche

1. Verfahren zum Ansteuern einer elektromechanischen Bremsvorrichtung in einem Fahrzeug, über die mithilfe eines elektrischen Bremsmotors (13), welcher einen Bremskolben (16) gegen eine Bremsscheibe (20) beaufschlagt, eine Bremskraft erzeugt werden kann, **dadurch gekennzeichnet, dass** bei fahrendem Fahrzeug die Position des Bremskolbens (16) in Abhängigkeit der Bremsentemperatur in der Weise eingestellt wird, dass ein Bremsbelag (17, 18), der am Bremskolben (16) gehalten ist, zur Erzeugung von Bremskraft an der Bremsscheibe (20) anliegt, wobei die Position des Bremskolbens (16) in der Weise temperaturabhängig eingestellt wird, dass die Bremskraft zumindest annähernd konstant bleibt.

2. Verfahren nach Anspruch 1, **dadurch gekennzeichnet, dass** die Position des Bremskolbens (16) temperaturabhängig weggesteuert eingestellt wird.

3. Verfahren nach Anspruch 1 oder 2, **dadurch gekennzeichnet, dass** der Bremskolben (16) auch vom Bremsdruck einer hydraulischen Fahrzeugbremse (1) beaufschlagt wird und die Position des Bremskolbens (16) durch Änderung des Bremsdrucks eingestellt wird.

4. Verfahren nach einem der Ansprüche 1 bis 3, **dadurch gekennzeichnet, dass** die Bremsentemperatur aus Zustands- oder Betriebsgrößen der Bremsvorrichtung, des Fahrzeugs oder eines weiteren Aggregats des Fahrzeugs bestimmt wird.

5. Verfahren nach einem der Ansprüche 1 bis 4, **dadurch gekennzeichnet, dass** die Bremsentemperatur gemessen wird.

6. Verfahren nach einem der Ansprüche 1 bis 5, **gekennzeichnet durch** eine Durchführung unterhalb eines Geschwindigkeitsgrenzwerts, der beispielsweise bei 30 km/h liegt.

7. Verfahren nach einem der Ansprüche 1 bis 6, **gekennzeichnet durch** eine Durchführung bei einem selbsttätig durchgeführten Einpark- oder Ausparkvorgang.

8. Regel- bzw. Steuergerät zur Ansteuerung der einstellbaren Komponenten der elektromechanischen Bremsvorrichtung (9) zur Durchführung des Verfahrens nach einem der Ansprüche 1 bis 7.

9. Elektromechanische Bremsvorrichtung für ein Fahrzeug, insbesondere Feststellbremse zum Festsetzen des Fahrzeugs im Stillstand, mit einem elektrischen Bremsmotor (13), der einen Bremskolben (16) in Richtung auf eine Bremsscheibe (20) verstellt, und mit einem Regel- bzw. Steuergerät (12) nach Anspruch 8 zur Ansteuerung der einstellbaren Komponenten der elektromechanischen Bremsvorrichtung (1).

## Claims

1. Method for actuating an electromechanical brake device in a vehicle, by way of which electromechanical brake device, with the aid of an electric brake motor (13) which impinges a brake piston (16) against a brake disc (20), a braking force can be generated, **characterized in that** the position of the brake piston (16) in a vehicle in motion is adjusted as a function of the brake temperature in such a manner that a brake pad (17, 18), which is held on the brake piston (16), for generating a braking force bears on the brake disc (20), wherein the position of the brake piston (16) as a function of the temperature is adjusted in such a manner that the braking force remains at least approximately constant.

2. Method according to Claim 1, **characterized in that** the position of the brake piston (16) as a function of the temperature is adjusted in terms of travel.

3. Method according to Claim 1 or 2, **characterized in that** the brake piston (16) is also impinged by the brake pressure of a hydraulic vehicle brake (1), and the position of the brake piston (16) is adjusted by varying the brake pressure.

4. Method according to one of Claims 1 to 3, **characterized in that** the brake temperature is determined from state variables or operating parameters of the brake device, of the vehicle, or of a further assembly of the vehicle.

5. Method according to one of Claims 1 to 4, **characterized in that** the brake temperature is measured.

6. Method according to one of Claims 1 to 5, **characterized by** an implementation carried out below a critical speed value which is 30 km/h, for example.

7. Method according to one of Claims 1 to 6, **characterized by** an implementation carried out while occupying or vacating a parking space in a self-acting manner.

8. Closed-loop or open-loop control apparatus for actuating the adjustable components of the electromechanical brake device (9) for carrying out the method according to one of Claims 1 to 7.

9. Electromechanical brake device for a vehicle, in particular a parking brake for parking the vehicle when stationary, having an electric brake motor (13) which adjusts a brake piston (16) in the direction towards a brake disc (20), and having a closed-loop or open-loop control apparatus (12) according to Claim 8 for actuating the adjustable components of the electromechanical brake device (1).

## Revendications

1. Procédé permettant de piloter un dispositif de freinage électromécanique dans un véhicule, par l'intermédiaire duquel une force de freinage peut être produite à l'aide d'un moteur de frein électrique (13) qui sollicite un piston de frein (16) contre un disque de frein (20),
**caractérisé en ce que** dans un véhicule en mouvement, la position du piston de frein (16) est réglée en fonction de la température des freins de telle sorte qu'une garniture de frein (17, 18) qui est maintenue au niveau du piston de frein (16) s'applique contre le disque de frein (20) pour produire la force de freinage, dans lequel la position du piston de frein (16) est réglée en fonction de la température de telle sorte que la force de freinage reste au moins approximativement constante.

2. Procédé selon la revendication 1, **caractérisé en ce que** la position du piston de frein (16) est réglée de manière proportionnelle à la course et en fonction de la température.

3. Procédé selon la revendication 1 ou 2, **caractérisé en ce que** le piston de frein (16) est aussi sollicité par la pression de freinage d'un frein de véhicule hydraulique (1), et la position du piston de frein (16) est réglée par une variation de la pression de freinage.

4. Procédé selon l'une quelconque des revendications 1 à 3, **caractérisé en ce que** la température des freins est déterminée à partir de grandeurs d'état ou de fonctionnement du dispositif de freinage, du véhicule ou d'une autre unité du véhicule.

5. Procédé selon l'une quelconque des revendications 1 à 4, **caractérisé en ce que** la température des freins est mesurée.

6. Procédé selon l'une quelconque des revendications 1 à 5, **caractérisé par** une exécution au-dessous d'une valeur limite de vitesse qui se situe par exemple à 30 km/h.

7. Procédé selon l'une quelconque des revendications 1 à 6, **caractérisé par** une exécution dans le cas d'une opération de stationnement ou de sortie de stationnement exécutée de façon autonome.

8. Appareil de régulation ou de commande pour piloter les composants réglables du dispositif de freinage électromécanique (9) pour exécuter le procédé selon l'une quelconque des revendications 1 à 7.

9. Dispositif de freinage électromécanique pour un véhicule, en particulier frein de stationnement pour immobiliser le véhicule à l'arrêt, comprenant un moteur de frein électrique (13) qui ajuste un piston de frein (16) en direction d'un disque de frein (20), et comprenant un appareil de régulation ou de commande (12) selon la revendication 8 pour piloter les composants réglables du dispositif de freinage électromécanique (1).
